# EUROPÄISCHE PATENTSCHRIFT

(11) **EP 1 435 080 B1**
(45) Veröffentlichungstag und Bekanntmachung des Hinweises auf die Patenterteilung: **30.05.2007**
(21) Anmeldenummer: 02782699.9
(22) Anmeldetag: 04.10.2002
(51) Int. Cl.: G08G 1/127, G08G 1/01

(54) **VERFAHREN UND SYSTEM ZUM ERMITTELN DER FORTBEWEGUNGSZEIT EINER MOBILEN NUTZER-ENDEINRICHTUNG**
METHOD AND SYSTEM FOR DETERMINING DISPLACEMENT TIME OF A MOBILE USER TERMINAL EQUIPMENT
PROCEDE ET SYSTEME PERMETTANT DE DETERMINER LE TEMPS DE DEPLACEMENT D'UN EQUIPEMENT TERMINAL MOBILE UTILISATEUR

(30) Priorität: 10.10.2001 DE 10149943
(43) Veröffentlichungstag der Anmeldung: 07.07.2004
(73) Patentinhaber: Vodafone Holding GmbH, 40213 Düsseldorf (DE)
(72) Erfinder: ALGER, Michael, 85540 Haar (DE); LANG, Thomas, 81539 München (DE)
(74) Vertreter: Müller, Thomas
(86) Internationale Anmeldenummer: PCT/DE2002/003773
(87) Internationale Veröffentlichungsnummer: WO 2003/034371

(56) Entgegenhaltungen:
- EP-A- 1 081 666
- WO-A-01/48725
- WO-A-02/43026
- WO-A-98/54682
- WO-A-02/071364
- DE-A- 19 604 084
- DE-A- 19 638 798
- GB-A- 2 369 709
- US-A- 5 465 289

## Beschreibung

Die vorliegende Erfindung betrifft zunächst ein Verfahren zum Ermitteln der Fortbewegungszeit wenigstens einer mobilen Nutzer-Endeinrichtung gemäß dem Oberbegriff von Patentanspruch 1 sowie dem Oberbegriff von Patentanspruch 16. Weiterhin betrifft die Erfindung ein System zum Ermitteln der Fortbewegungszeit wenigstens einer mobilen Nutzer-Endeinrichtung gemäß dem Oberbegriff von Patentanspruch 20. Schließlich betrifft die Erfindung auch ein Computerprogrammprodukt.

Derartige Verfahren und Systeme werden beispielsweise eingesetzt, um die Reisezeit eines Fahrzeugs zwischen einem gewählten Ausgangspunkt und einem räumlich davon getrennten Endpunkt zu bestimmen.

Beispielsweise sind Lösungen bekannt, bei denen die Fortbewegungszeit eines Fahrzeugs mittels stationären Radarsensoren erfaßt wird. Dabei passieren die Fahrzeuge die Sensoren, die wiederum an den Straßen montiert sind. Die Sensoren messen beispielsweise die Geschwindigkeit, die Verkehrsdichte und ähnliche Daten und setzen bei Anomalien eine Meldung an eine Zentraleinheit ab. Dort werden die Daten gesammelt und zu einem entsprechenden Verkehrslagebild verarbeitet.

Aus der JP-A-080 50 695 ist beispielsweise ein System bekannt, bei dem die Fortbewegungszeit eines Fahrzeugs ermittelt wird, indem die Distanz zwischen einem Startpunkt und einem Zielpunkt zunächst in eine Vielzahl von Streckensegmenten aufgeteilt sind. Die einzelnen Streckensegmente sind mit entsprechenden Sensorelementen bestückt, über die die Fahrzeuggeschwindigkeit ermittelt wird. Auf Grund dieser Daten wird für jedes Streckensegment eine entsprechende Fortbewegungszeit ermittelt. Aus den einzelnen Fortbewegungszeiten pro Streckensegment wird anschließend eine Fortbewegungszeit für die gesamte Strecke zwischen Startpunkt und Zielpunkt ermittelt.

Gemäß einer anderen, in der EP-A-0 978 811 beschriebenen Lösung wird ein Verfahren sowie eine Einrichtung zur Reisezeitermittlung von Kraftfahrzeugen beschrieben. Dabei ergibt sich die Reisezeit des Fahrzeugs auf einem Streckenabschnitt eines Verkehrswegs aus der Differenz von Ausfahrtzeit zu Einfahrtzeit. Zur Bestimmung dieser Zeiten ist vorgesehen, daß die Kraftfahrzeuge an durch den Ort der Zufahrt beziehungsweise der Ausfahrt bestimmten Kontrollpunkten des Streckenabschnitts im Verkehrsfluß individuell automatisch mittels Videokamera optisch erfaßt werden. Die auf diese Weise gewonnenen Bildinformationen werden in Bilddaten umgewandelt und mit einer Zeitmarke versehen. In einer Zentraleinheit wird aus diesen gewonnenen Informationen die Fortbewegungszeit des Kraftfahrzeugs ermittelt.

Gemäß einer anderen Lösung ist es beispielsweise bekannt, eine Verkehrsdatenerfassung mittels verteilter Erfassungssensoren durchzuführen. Bei solchen Erfassungssensoren handelt es sich beispielsweise um sogenannte "Floating Cars". "Floating Cars" sind Fahrzeuge, die mit geeigneten Geräten ausgestattet sind. Diese Geräte in Form entsprechend ausgebildeter Erfassungssensoren erzeugen Positionsdaten, indem sie beispielsweise per GPS ihre Position messen. Die auf diese Weise ermittelten Positionsdaten werden dann zu einer Zentraleinheit übertragen, wozu die Erfassungssensoren zumindest zeitweilig mit der Zentraleinheit kommunizieren. Dabei werden die einzelnen Positionsdaten von der Zentraleinheit erfaßt und in dieser zu entsprechenden Verkehrsinformationen weiterverarbeitet.

Alle vorstehend beschriebenen Lösungen haben jedoch den Nachteil, daß sie zum einen sehr aufwendig und zum anderen sehr kostenintensiv sind. So ist es beispielsweise in allen Fällen erforderlich, eine spezielle Infrastruktur zu schaffen.

Dazu müssen entweder spezielle Nutzer-Endeinrichtungen zur Verfügung gestellt werden, oder aber es ist ein spezielles Kommunikationsnetzwerk für die Nutzer-Endeinrichtungen erforderlich.

Eine Datenerfassung mittels stationärer Sensoren erfordert beispielsweise signifikante Investitionen in die Sensoren. Weiterhin ist die Anwendung einer solchen Lösung auf Gebiete mit vorhandener Sensortechnik begrenzt. Die Datenerfassung mittels "Floating Car"-Technologien erfordert die Teilnahme einer ausreichend hohen Anzahl von entsprechend ausgestatteten Fahrzeugen. Weiterhin erzeugt eine solche Lösung bei flächendeckendem Betrieb hohe Kosten für die drahtlose Kommunikation der "Floating Cars" mit der auswertenden Zentraleinheit.

Der vorliegenden Erfindung liegt daher die Aufgabe zu Grunde, ein Verfahren sowie ein System der eingangs genannten Art derart weiterzubilden, daß die im Zusammenhang mit dem Stand der Technik beschriebenen Nachteile vermieden werden können. Insbesondere soll es auf einfache und kostengünstige Weise ermöglicht werden, die Fortbewegungszeit von mobilen Nutzer-Endeinrichtungen zu bestimmen.

Diese Aufgabe wird erfindungsgemäß gelöst durch das Verfahren mit den Merkmalen gemäß dem unabhängigen Patentanspruch 1, das Verfahren mit den Merkmalen gemäß dem unabhängigen Patentanspruch 16, das System mit den Merkmalen gemäß dem unabhängigen Patentanspruch 20 sowie das Computerprogrammprodukt mit den Merkmalen gemäß dem unabhängigen Patentanspruch 21. Weitere Vorteile, Merkmale, Details, Aspekte und Effekte der Erfindung ergeben sich aus den Unteransprüchen, der Beschreibung sowie den Zeichnungen. Merkmale und Details, die im Zusammenhang mit den erfindungsgemäßen Verfahren beschrieben sind, gelten dabei selbstverständlich auch im Zusammenhang mit dem erfindungsgemäßen System, und jeweils umgekehrt. Analoges gilt für das erfindungsgemäße Computerprogrammprodukt.

Der Erfindung liegt die Erkenntnis zu Grunde, daß die Aufgabe dadurch gelöst werden kann, daß spezifische Informationen von Nutzer-Endeinrichtungen, insbesondere solche, die bei deren Betrieb ohnehin anfallen, genutzt werden können, um daraus deren Fortbewegungszeit zu ermitteln.

Gemäß dem ersten Aspekt der Erfindung wird ein Verfahren zum Ermitteln der Fortbewegungszeit wenigstens einer mobilen Nutzer-Endeinrichtung zwischen einem Ausgangspunkt A und einem räumlich davon getrennten Endpunkt E bereitgestellt, das erfindungsgemäß durch folgende Schritte gekennzeichnet ist:
a) spezifische Informationen wenigstens einer am Ausgangspunkt A befindlichen mobilen Nutzer-Endeinrichtung werden ermittelt und jeweils mit einer Zeitmarke TA verknüpft;
b) spezifische Informationen wenigstens einer am Endpunkt E befindlichen mobilen Nutzer-Endeinrichtung werden ermittelt und jeweils mit einer Zeitmarke TE verknüpft;
c) die spezifischen Informationen der wenigstens einen am Ausgangspunkt A und am Endpunkt E befindlichen mobilen Nutzer-Endeinrichtung werden in wenigstens einer Zentraleinheit elektronisch miteinander verglichen; und
d) bei Übereinstimmung der spezifischen Informationen einer mobilen Nutzer-Endeinrichtung am Ausgangspunkt A und am Endpunkt E wird in der Zentraleinheit elektronisch die Zeitdifferenz TE - TA zwischen der Zeitmarke TE und der Zeitmarke TA gebildet und daraus die Fortbewegungszeit ermittelt; und

die mit einer Zeitmarke verknüpften spezifischen Informationen oder Aktionsprofile jeder mobilen Nutzer-Endeinrichtung und/oder die daraus ermittelten Fortbewegungszeiten werden in Form von Vergleichsdaten zumindest zeitweilig in einer Vergleichsdatei abgelegt.

Dadurch wird es möglich, die Fortbewegungszeit der mobilen Nutzer-Endeinrichtung auf einfache und kostengünstige Weise zu ermitteln, ohne daß dafür eine spezielle Infrastruktur erforderlich wäre. Zur Bestimmung der Fortbewegungszeit werden spezifische Informationen der mobilen Nutzer-Endeinrichtungen ermittelt und verwertet. Bei solchen spezifischen Informationen handelt es sich vorteilhaft um Informationen, die während des Betriebs der Nutzer-Endeinrichtungen ohnehin anfallen. Dadurch ist das Verfahren überall dort einsetzbar, wo sich entsprechende Nutzer-Endeinrichtungen befinden. Einige nicht ausschließliche Beispiele hierzu werden im weiteren Verlauf der Beschreibung näher beschrieben.

Ein Grundgedanke der vorliegenden Erfindung besteht zunächst darin, daß Angaben über Fortbewegungszeiten gewonnen werden können, ohne daß die Nutzer-Endeinrichtungen permanent und genau lokalisiert werden müßten. Wenn die Fortbewegungszeit wenigstens einer mobilen Nutzer-Endeinrichtung zwischen einem Ausgangspunkt A und einem räumlich davon getrennten Endpunkt E ermittelt werden soll, werden in einem ersten Schritt zunächst spezifische Informationen wenigstens einer am Ausgangspunkt A befindlichen mobilen Nutzer-Endeinrichtung ermittelt und jeweils mit einer entsprechenden Zeitmarke TA verknüpft. Dabei ist die Erfindung nicht auf bestimmte spezifische Informationen der mobilen Nutzer-Endeinrichtungen beschränkt. Wichtig ist lediglich, daß die mobile Nutzer-Endeinrichtung auf Grund der ermittelten spezifischen Informationen einwandfrei erkannt und charakterisiert werden kann. Diese Informationen werden mit einer entsprechenden Zeitmarke verknüpft. Auf diese Weise läßt sich bestimmten, daß sich die Nutzer-Endeinrichtung zu einem bestimmten Zeitpunkt, der der Zeitmarke TA entspricht, am Ausgangspunkt A befunden hat.

Auf gleiche Weise werden gemäß einem weiteren Schritt des erfindungsgemäßen Verfahrens spezifische Informationen wenigstens einer am festgelegten Endpunkt E befindlichen Nutzer-Endeinrichtung ermittelt und jeweils mit einer Zeitmarke TE verknüpft. Auf diese Weise kann festgelegt werden, daß sich eine solche mobile Nutzer-Endeinrichtung zu einem bestimmten Zeitpunkt, der der Zeitmarke TE entspricht, am Endpunkt E befunden hat.

Die auf diese Weise ermittelten spezifischen Informationen der wenigstens einen am Ausgangspunkt A und am Endpunkt E befindlichen mobilen Nutzer-Endeinrichtung werden in der wenigstens einen Zentraleinheit elektronisch miteinander verglichen. Auf diese Weise wird überprüft, ob die jeweiligen spezifischen Informationen, und damit letztendlich auch die dazugehörigen Nutzer-Endeinrichtungen, übereinstimmen.

Wenn die spezifischen Informationen einer mobilen Nutzer-Endeinrichtung am Ausgangspunkt A und am Endpunkt E übereinstimmen, bedeutet dies, daß sich ein und dieselbe Nutzer-Endeinrichtung sowohl am Ausgangspunkt A als auch am Endpunkt E befunden hat. Wird eine solche Übereinstimmung festgestellt, wird in der Zentraleinheit elektronisch die Zeitdifferenz TE - TA zwischen der Zeitmarke TE der mobilen Nutzer-Endeinrichtung am Endpunkt und der Zeitmarke TA der mobilen Nutzer-Endeinrichtung am Ausgangspunkt A gebildet. Aus der entstehenden Zeitdifferenz wird anschließend die Fortbewegungszeit der mobilen Nutzer-Endeinrichtung zwischen dem Ausgangspunkt A und dem räumlich davon getrennten Endpunkt E ermittelt. Wie dies im einzelnen geschehen kann, wird an Hand nicht ausschließlicher Beispiele im weiteren Verlauf der Beschreibung näher erläutert.

Diese Vergleichsdatei kann beispielsweise zumindest zeitweilig in einer Speichereinrichtung abgespeichert werden. Die Speichereinrichtung wiederum kann zumindest zeitweilig der Zentraleinheit zugeordnet werden. Beispielsweise kann es sich bei der Speichereinrichtung um einen Bestandteil der Zentraleinheit handeln. Allerdings ist es auch möglich, daß die Speichereinrichtung von der Zentraleinheit räumlich getrennt ausgebildet ist und daß die Zentraleinheit zumindest zeitweilig auf diese Speichereinrichtung zugreift.

Die vorliegende Erfindung ist nicht auf eine bestimmte Anzahl von Nutzer-Endeinrichtungen beschränkt. Selbstverständlich kann das Verfahren auch dann vorteilhaft eingesetzt werden, wenn eine größere Anzahl von Nutzer-Endeinrichtungen vorhanden ist.

Besonders vorteilhaft ist es, wenn eine möglichst große Anzahl von Nutzer-Endeinrichtungen zur Verfügung steht. Auf diese Weise wird eine besonders einfache und dennoch genaue geographische Zuordnung von Nutzer-Endeinrichtungen möglich, wie im weiteren Verlauf der Beschreibung noch näher erläutert wird.

Weiterhin ist die Erfindung nicht auf eine bestimmte Ausgestaltungsart von Nutzer-Endeinrichtungen beschränkt. Grundsätzlich kann jede Art von mobilen Nutzer-Endeinrichtungen verwendet werden, für die spezifische Informationen generiert werden können. Diese spezifischen Informationen müssen die jeweilige Nutzer-Endeinrichtung individualisieren können. Weiterhin sollten die generierten spezifischen Informationen vorteilhaft auch zur Weiterverarbeitung geeignet sein. Einige nicht ausschließliche Beispiele für geeignete Nutzer-Endeinrichtungen werden im weiteren Verlauf der Beschreibung näher erläutert.

Mit dem erfindungsgemäßen Verfahren ist es primär möglich, die aktuellen Fortbewegungszeiten von Nutzer-Endeinrichtungen zu ermitteln. Dabei ist es nicht unbedingt erforderlich, die ermittelten Fortbewegungszeiten mit entsprechenden Referenzdaten zu vergleichen, um dadurch entsprechende Informationen zu erzeugen, beispielsweise Verkehrsinformationen oder dergleichen. Dennoch kann das erfindungsgemäße Verfahren auch für solche Zwecke eingesetzt werden.

Vorteilhaft können die spezifischen Informationen der mobilen Nutzer-Endeinrichtungen elektronisch ermittelt werden. Ebenso kann die Verknüpfung der spezifischen Informationen mit entsprechenden Zeitmarken elektronisch erfolgen. Die Auswertung der Informationen sowie die Ermittlung der Zeitdifferenz zwischen den einzelnen Zeitmarken und damit die Bildung der Fortbewegungszeit kann vorteilhaft automatisch in der Zentraleinheit erfolgen.

Die Durchführung des Verfahrens kann vorteilhaft unter Zuhilfenahme geeigneter Programmittel, beziehungsweise Software, vorgenommen, zumindest aber unterstützt werden.

Vorzugsweise kann das Verfahren unter Verwendung eines Informationssystems, insbesondere eines Kommunikationssystems durchgeführt werden, wobei die Fortbewegungszeit aus spezifischen Daten der mobilen Nutzer-Endeinrichtungen des Informationsübertragungssystems ermittelt wird. Bei dem Informationsübertragungssystem handelt es sich vorteilhaft um ein eigenständiges System. Dabei ist die Erfindung nicht auf bestimmte Typen von Informationsübertragungssystemen beschränkt. Das Informationsübertragungssystem muß jedoch derart ausgestaltet sein, daß spezifische Informationen der Nutzer-Endeinrichtungen ermittelt werden können. Geeignete Informationsübertragungssysteme sind beispielsweise Systeme zum Übertragen von Signalen, wie beispielsweise Systeme zur Übertragung von Daten, von Funksignalen und dergleichen. Bei den Nutzer-Endeinrichtungen kann es sich beispielsweise um mobile Rechner, PDAs (Personal Digital Assistant) und dergleichen handeln.

Besonders vorteilhaft kann das Verfahren unter Verwendung eines Mobilfunksystems, insbesondere eines zellularen Mobilfunksystems durchgeführt werden, wobei die mobilen Nutzer-Endeinrichtungen als Mobiltelefone ausgebildet sind und wobei die Fortbewegungszeit aus spezifischen Daten der Mobiltelefone ermittelt wird. Bei Einsatz eines Mobilfunksystems können die spezifischen Informationen der als Mobiltelefon ausgebildeten Nutzer-Endeinrichtungen beispielsweise aus Informationen bezüglich der Mobiltelefone gebildet werden, beispielsweise in bezug auf die Bewegung der Mobiltelefone, etwa zwischen verschiedenen Zellen (Handover zwischen Zellen) und/oder innerhalb einer Zelle, die zeitabhängige und/oder örtliche Verteilung der Mobiltelefone, die Anzahl und/oder Dichte der Mobiltelefone pro Zelle, die Gesprächsaufbaurate und/oder -abbaurate und dergleichen. Natürlich ist es auch denkbar, als zu erfassende Informationen die Anrufhäufigkeit bei bestimmten Rufnummern zu erfassen.

Wenn das erfindungsgemäße Verfahren unter Verwendung eines Mobilfunksystems beispielsweise eingesetzt wird, um die Fortbewegungszeit von Fahrzeugen zwischen einem Ausgangspunkt und einem Endpunkt zu ermitteln, ist es nunmehr nicht mehr erforderlich, eine hohe Positionierungsgenauigkeit bereitzustellen, um die positionierten Mobilteilnehmer in Autofahrer und andere zu trennen. Wie dies im einzelnen erfolgen kann, wird im weiteren Verlauf der Beschreibung noch näher erläutert.

Vorteilhaft können spezifische Informationen jeweils aller am Ausgangspunkt A und/oder Endpunkt E befindlichen mobilen Nutzer-Endeinrichtungen ermittelt und mit einer entsprechenden Zeitmarke TA, TE versehen werden.

Vorzugsweise können die spezifischen Informationen der wenigstens einen am Ausgangspunkt A und am Endpunkt E befindlichen mobilen Nutzer-Endeinrichtung an die Zentraleinheit übertragen oder in der Zentraleinheit elektronisch erzeugt werden. Wenn die spezifischen Informationen innerhalb der Nutzer-Endeinrichtungen erzeugt werden, verfügen diese vorzugsweise über eine eigene Zentraleinheit, in der die Informationen der einzelnen Nutzer-Endeinrichtungen gesammelt und anschließend zu den entsprechenden spezifischen Informationen zusammengefügt werden. In einem solchen Fall werden die bereits fertiggestellten spezifischen Informationen an die Zentraleinheit, die zumindest zeitweilig mit den mobilen Nutzer-Endeinrichtungen kommuniziert, übertragen.

Wenn die spezifischen Informationen der mobilen Nutzer-Endeinrichtungen innerhalb der Zentraleinheit ermittelt werden, werden die einzelnen Informationen der mobilen Nutzer-Endeinrichtungen zunächst auf die Zentraleinheit übertragen. Dort werden dann die entsprechenden spezifischen Informationen für jede mobile Nutzer-Endeinrichtung erzeugt.

Vorteilhaft kann der Ausgangspunkt A und/oder der Endpunkt E in Form einer geographischen Größe festgelegt werden. Hierbei kann es sich beispielsweise um einen speziellen, räumlich definierten Ort handeln. Dies können beispielsweise bestimmte Städte, bestimmte Straßen, bestimmte geographische Anhaltspunkte wie Brücken, besondere Bauwerke und dergleichen sein. Natürlich können die Ausgangspunkte und/oder Endpunkte auch auf andere Weise festgelegt werden.

Wenn das Verfahren beispielsweise im Zusammenhang mit einem Mobilfunksystem durchgeführt wird, kann der Ausgangspunkt A beispielsweise als eine Zelle des Mobilfunksystems ausgebildet sein. In diesem Fall ist der Endpunkt E vorteilhaft als eine von dieser Zelle räumlich getrennte weitere Zelle des Mobilfunksystems ausgebildet. In anderer Ausgestaltung kann auch vorgesehen sein, daß der Ausgangspunkt A als eine erste Begrenzung einer bestimmten Zelle des Mobilfunksystems ausgebildet ist, während der Endpunkt E als eine zweite Begrenzung derselben Zelle ausgebildet ist.

Die Erfindung ist nicht auf bestimmte Ausgestaltungsformen für die Ausgangspunkte und/oder Endpunkte beschränkt, so daß die vorstehend genannten Beispiele keinerlei ausschließlichen Charakter aufweisen.

In weiterer Ausgestaltung kann für die wenigstens eine mobile Nutzer-Endeinrichtung am Ausgangspunkt A und/oder für die wenigstens eine mobile Nutzer-Endeinrichtung am Endpunkt E aus für diese spezifischen Informationen ein Aktionsprofil ermittelt werden, wobei jedes Aktionsprofil mit einer Zeitmarke TA, TE verknüpft wird. Vorteilhaft kann das Aktionsprofil der mobilen Nutzer-Endeinrichtung dabei aus Standortinformationen und/oder Aktivitätsinformationen der Nutzer-Endeinrichtung ermittelt werden. Wenn es sich bei den mobilen Nutzer-Endeinrichtungen um Mobiltelefone innerhalb eines Mobilfunknetzes handelt, kann dies beispielsweise die Netzlast in ausgewählten Gebieten, beispielsweise in bestimmten Mobilfunkzellen sein.

Bei den vorstehend genannten Aktionsprofilen kann es sich im Zusammenhang mit Mobiltelefonen beispielsweise auch um die sogenannten "Call Data Records" des Mobilfunksystems handeln. Hierbei werden bei allen mobilen Telefongesprächen Beginn, Ende (und damit die Dauer) sowie die Position des Mobiltelefons bei Beginn und dessen Position bei Ende des Gesprächs erfaßt und ausgewertet.

Weiterhin ist es denkbar, daß Positionsdaten der mobilen Nutzer-Endeinrichtungen erzeugt werden, die anschließend zu einem Positionsprofil zusammengefaßt werden. Ebenso ist es denkbar, Informationen bezüglich der Bewegung einer zeitabhängigen und/oder örtlichen Verteilung, einer Anzahl und/oder Dichte pro Flächeneinheit von mobilen Endgeräten zu erzeugen und zu entsprechenden Aktionsprofilen zusammenzufassen.

Wenn das Verfahren im Zusammenhang mit einem Mobilfunksystem - insbesondere einem zellularen Mobilfunksystem - betrieben wird, ist es grundsätzlich möglich, als spezifische Informationen der in diesem Fall als Mobiltelefon ausgebildeten Nutzer-Endeinrichtungen sämtliche Informationen zu verwerten, die im Rahmen der grundlegenden Funktionsweise des Mobilfunksystems anfallen. Darunter fallen neben den vorstehend genannten Informationen auch Echtzeit-Registrierungs- und Zellaktivitätsdaten von aktiven mobilen Endgeräten. Diese werden in der Regel von entsprechenden Basisstationen empfangen, die wiederum einzelnen Zellen des Mobilfunksystems zugeordnet sind. Über die jeweiligen Basisstationen werden die empfangenen Daten an eine Zentraleinheit weitergeleitet, wo sie weiterverarbeitet werden. Insbesondere werden von den Basisstationen Daten von solchen Mobiltelefonen empfangen, die sich gerade in jeweils einer Zelle befinden. Dabei ist es nicht unbedingt erforderlich, daß mittels der Mobiltelefone zur Erfassung von spezifischen Informationen gerade auch ein Telefonat geführt werden müßte. Vielmehr reicht es auch, wenn sich das Mobiltelefon in einem aktiven Zustand befindet, das heißt wenn es eingeschaltet ist. In einem solchen Fall sendet das Mobiltelefon in regelmäßigen Abständen sogenannte Registrierungssignale aus, die dann von in der Nähe befindlichen Basisstationen erfaßt und an die Zentraleinheit weitergeleitet werden. Hierbei handelt es sich um eine grundlegende Funktionsweise eines zellularen Mobilfunksystems. Derartige Registrierungsdaten sind ebenfalls besonders vorteilhaft als spezifische Informationen der Nutzer-Endeinrichtungen geeignet.

Vorteilhaft kann ein wie vorstehend beschriebenes Aktionsprofil in der dazugehörigen mobilen Nutzer-Endeinrichtung oder in der Zentraleinheit ermittelt werden. Wenn die Aktionsprofile in der Zentraleinheit ermittelt werden, können die einzelnen Nutzer-Endeinrichtungen einfacher und damit auch kostengünstiger hergestellt werden. Sie müssen lediglich in der Lage sein, entsprechende spezifische Informationen zu erzeugen und an die Zentraleinheit weiterzuleiten. Die eigentliche Auswertung und Weiterverarbeitung der spezifischen Informationen zu den Aktionsprofilen erfolgt dann zentral in der Zentraleinheit.

In weiterer Ausgestaltung kann die Zentraleinheit wenigstens eine Rechnereinheit mit einem oder mehreren elektronischen Rechner(n) aufweisen. In diesem Fall kann die Fortbewegungszeit elektronisch in der wenigstens einen Rechnereinheit ermittelt werden. Bei Verwendung mehrerer Rechnereinheiten können diese vorzugsweise zu einem Rechnemetzwerk zusammengeschaltet werden beziehungsweise sein.

Darüber hinaus können die Vergleichsdaten in der Zentraleinheit beispielsweise noch einem Gewichtungsschritt unterzogen werden.

In weiterer Ausgestaltung kann vorgesehen sein, daß in der Zentraleinheit auf der Basis der Vergleichsdaten eine geographische und/oder nutzerspezifische Zuordnung erzeugt wird.

Hierbei kann es sich beispielsweise um eine Art Histogramm handeln, bei der die Anzahl der mobilen Nutzer-Endeinrichtung über der Fortbewegungszeit aufgetragen ist.

In weiterer Ausgestaltung können die mit einer Zeitmarke verknüpften spezifischen Informationen oder Aktionsprofile jeder mobilen Nutzer-Endeinrichtung und/oder die daraus ermittelten Fortbewegungszeiten und/oder die daraus erzeugten Vergleichsdaten innerhalb der Zentraleinheit mit entsprechenden Referenzwerten verglichen werden. Die Referenzwerte können dabei vorteilhaft in einer geeignete Speichereinrichtung abgespeichert, beziehungsweise abgelegt werden beziehungsweise sein.

Vorteilhaft ist bei dem wie vorstehend beschriebenen Verfahren vorgesehen, daß die Fortbewegungszeit fortlaufend ermittelt wird. Weiterhin kann vorgesehen sein, daß die Fortbewegungszeit auch fortlaufend aktualisiert wird.

Gemäß dem zweiten Aspekt der Erfindung wird ein Verfahren zum Ermitteln der Fortbewegungszeit wenigstens einer mobilen Nutzer-Endeinrichtung zwischen einem Startpunkt und einem räumlich davon getrennten Zielpunkt bereitgestellt, das erfindungsgemäß dadurch gekennzeichnet ist, daß die Strecke zwischen dem Startpunkt und dem Zielpunkt in zwei oder mehr Streckensegmente S mit jeweils einem Ausgangspunkt A und einem Endpunkt E unterteilt wird, daß die Fortbewegungszeit innerhalb eines jeden Streckensegments S in einer wie vorstehend beschriebenen erfindungsgemäßen Weise ermittelt wird, daß die einzelnen Fortbewegungszeiten der Streckensegmente in der Zentraleinheit aufsummiert werden und daß aus der Summe der einzelnen Fortbewegungszeiten die Gesamtfortbewegungszeit ermittelt wird.

Bei diesem Verfahren wird es auf einfache und kostengünstige Weise möglich, die Fortbewegungszeit mit wenigstens einer mobilen Nutzer-Endeinrichtung zwischen einem Startpunkt und einem Zielpunkt zu ermitteln. Dazu ist zunächst vorgesehen, daß die Strecke zwischen dem Startpunkt und dem Zielpunkt in eine Anzahl von Streckensegmenten unterteilt wird. Jedes Streckensegment weist wiederum einen Ausgangspunkt und einen Endpunkt auf, wobei vorteilhaft der Endpunkt eines Streckensegments den Ausgangspunkt eines darauffolgenden Streckensegments darstellt.

Die Fortbewegungszeiten der mobilen Nutzer-Endeinrichtungen werden in der wie vorstehend im Zusammenhang mit dem Verfahren gemäß dem ersten Aspekt der Erfindung beschriebenen Weise ermittelt, so daß diesbezüglich vollinhaltlich auf die vorstehenden Ausführungen Bezug genommen und hiermit verweisen wird.

Die jeweiligen Fortbewegungszeiten der einzelnen Streckensegmente werden in der Zentraleinheit aufsummiert, wobei aus der Summe der einzelnen Fortbewegungszeiten die Gesamtfortbewegungszeit ermittelt wird.

Vorteilhaft ist vorgesehen, daß die einzelnen Fortbewegungszeiten der Streckensegmente fortlaufend ermittelt werden und daß die Gesamtfortbewegungszeit auf der Basis der Fortbewegungszeiten innerhalb der Streckensegmente fortlaufend aktualisiert wird.

Auf diese Weise wird es möglich, immer eine aktuelle Fortbewegungszeit zwischen einem Startpunkt und einem Zielpunkt bereitzustellen. Wenn sich die Fortbewegungszeit von mobilen Endgeräten innerhalb eines Streckenabschnitts ändert, fließt diese Zeitänderung sofort in die Gesamtfortbewegungszeit ein, so daß sich auch diese entsprechend verändert.

Im Zusammenhang mit beiden vorstehend beschriebenen Erfindungsaspekten kann vorteilhaft vorgesehen sein, daß in der Zentraleinheit auf der Basis der ermittelten Fortbewegungszeit(en) und/oder der ermittelten Gesamtfortbewegungszeit(en) Verkehrsinformationen erzeugt werden. Wenn das Verfahren unter Einsatz eines Mobilfunksystems durchgeführt wird, ist dabei insbesondere möglich, eine Verkehrsdatenerfassung ohne Map-Matching allein aus Daten des Mobilfunknetzes zu realisieren. Dabei ist die Erfindung jedoch nicht auf bestimmte Typen von Verkehrsinformationen beschränkt. Beispielsweise können Verkehrsinformationen nicht nur über die aktuell zu erwartende Fortbewegungszeit, über aktuelle Verkehrssituationen und damit über den Status Quo erzeugt werden. Ebenso ist es auch denkbar, daß Verkehrsinformationen erzeugt werden, die Vorhersagen über künftig zu erwartende Verkehrssituationen zulassen.

Weiterhin kann vorgesehen sein, daß die mit einer Zeitmarke TA, TE verknüpften spezifischen Informationen oder Aktionsprofile jeder mobilen Nutzer-Endeinrichtung und/oder die daraus ermittelten Fortbewegungszeiten und/oder die daraus erzeugten Vergleichsdaten und/oder die ermittelten Gesamtfortbewegungszeiten und/oder die erzeugten Verkehrsinformationen von der Zentraleinheit auf ausgewählte oder alle mobile(n) Nutzer-Endeinrichtungen übertragen werden. Im ersten Fall ist es möglich, die entsprechenden Informationen nur solchen Nutzern zur Verfügung zu stellen, die sich einem entsprechenden Servicedienst angeschlossen haben.

Die wie vorstehend beschriebenen erfindungsgemäßen Verfahren weisen neben den bereits genannten Vorteilen noch eine Reihe weiterer Vorteile auf. Wenn die Verfahren beispielsweise zur Erzeugung von Verkehrsdaten eingesetzt werden, ist es möglich, Fortbewegungszeiten von Fahrzeugen auch ohne das Vorhandensein von Staus verfügbar zu machen. Dies ist beispielsweise wichtig für statistische Zwecke oder zur Unterscheidung von dichtem, zähem oder Stop-and-Go-Verkehr. Weiterhin kann auf die Unterscheidung von Autofahrern und anderen Teilnehmern verzichtet werden, da eine Positionierungsgenauigkeit der einzelnen mobilen Nutzer-Endgeräte nicht erforderlich ist. Vielmehr kann die geographische Zuordnung der mobilen Nutzer-Endgeräte auf indirektem Wege erfolgen, wie nachfolgend an Hand eines nicht ausschließlichen Beispiels grundsätzlich erläutert wird, ohne daß die Erfindung auf dieses genannte Beispiel beschränkt ist.

Gemäß diesem Beispiel sollen Fortbewegungszeiten von mobilen Nutzer-Endeinrichtungen unter Verwendung eines Mobilfunknetzes ermittelt werden, wobei die einzelnen Nutzer-Endeinrichtungen als Mobiltelefone ausgebildet sind. Dabei wird zunächst ein Streckensegment festgelegt, das von einem Ausgangspunkt A und von einem Endpunkt E begrenzt ist. Bei dem Ausgangspunkt A und dem Endpunkt E kann es sich beispielsweise jeweils um eine Zelle des Mobilfunksystems handeln, wobei die einzelnen Zellen räumlich voneinander getrennt sind, und wobei zwischen den einzelnen Zellen weitere Zellen liegen können.

Sowohl in der als Ausgangspunkt A dienenden Zelle als auch in der als Endpunkt E dienenden Zelle werden fortlaufend spezifische Informationen aller in der jeweiligen Zelle aktiven Mobiltelefone ermittelt. Die jeweils ermittelten spezifischen Informationen werden an die Zentraleinheit weitergeleitet. Darüber hinaus werden die jeweiligen spezifischen Informationen eines jeden Mobiltelefons jeweils mit einer entsprechenden Zeitmarke versehen.

In der Zentraleinheit werden die spezifischen Informationen aller Mobiltelefone, insbesondere diejenigen der in der Ausgangszelle sowie der Endzelle befindlichen aktiven Mobiltelefone - vorzugsweise fortlaufend - miteinander verglichen. Tritt hierbei eine Übereinstimmung auf, so bedeutet dies, daß sich das entsprechende Mobiltelefon von der als Ausgangspunkt dienenden Zelle in die als Endpunkt dienende Zelle bewegt hat. Zur Ermittlung der Fortbewegungszeit wird aus den entsprechenden Zeitmarken die Zeitdifferenz ermittelt, die ein Maß für den Zeitraum darstellt, den das Mobiltelefon benötigt hat, um vom Ausgangspunkt am Endpunkt anzugelangen.

Nun ist es grundsätzlich denkbar, daß sich ein Mobiltelefon auf unterschiedlichste Art und Weise vom Ausgangspunkt an den Endpunkt bewegen kann. So ist es beispielsweise denkbar, daß sich das aktive Mobiltelefon über eine Autobahn, eine Hauptstraße, eine Nebenstraße, mit Fahrtunterbrechung, ohne Fahrtunterbrechung, mit der Eisenbahn, mit dem Fahrrad, zu Fuß oder dergleichen vom Ausgangspunkt zum Endpunkt bewegt.

Die einzelnen Zeitinformationen werden deshalb in einer als Histogramm ausgebildeten Vergleichsdatei abgelegt, wobei in diesem Histogramm die Anzahl der aktiven Mobiltelefone über die Fortbewegungszeit aufgetragen wird. Auf diese Weise fallen zunächst all diejenigen Mobiltelefone aus der Wertung, die sich zwar am Ausgangspunkt befinden, sich aber nicht in Richtung des Endpunkts bewegen. Weiterhin kann von der Annahme ausgegangen werden, daß sich im Maximum des Histogramms diejenigen Mobilfunkteilnehmer befinden, die sich im genannten Beispiel auf der Autobahn befinden. Auf diese Weise wird es beispielsweise möglich, einem zwischen einem Ausgangspunkt und einem Endpunkt befindlichen Autobahnstück eine bestimmte Reisezeit zuzuordnen.

Natürlich kann auch die Situation auftreten, daß sich eine entsprechend hohe Anzahl aktiver Mobiltelefone im Zug zwischen dem Ausgangspunkt A und dem Endpunkt E bewegt. Um hieraus nicht fälschlicherweise auf eine Reisezeit auf einem Autobahnstück rückzuschließen, können beispielsweise entsprechende Fahrplandaten von Zügen als Vergleichsdaten vorgesehen sein, so daß die ermittelten Fortbewegungszeiten fortlaufend mit solchen Fahrplandaten gegengeprüft werden können. Auf diese Weise wird eine falsche Zuordnung von Fortbewegungszeiten wirksam verhindert.

Wenn sich nun auf einem Autobahnstück zwischen dem Ausgangspunkt A und dem Endpunkt E beispielsweise ein Stau bildet, benötigt das Maximum der aktiven Mobilfunkteilnehmer entsprechend länger, um vom Anfangspunkt A zum Endpunkt E, das heißt von der Anfangszelle in die Endzelle, zu gelangen. Damit verschiebt sich das Maximum zu einer höheren Zeitdauer.

Für jeden Streckenabschnitt zwischen einem Ausgangspunkt A und einem Endpunkt E kann die Fortbewegungszeit auf diese Weise fortlaufend ermittelt werden, so daß für den entsprechenden Streckenabschnitt immer eine aktuelle Fortbewegungszeit bekannt ist.

Auf diese Weise wird es möglich, eine dynamische, sich an die äußeren Umstände anpassende Fortbewegungszeit zwischen dem Ausgangspunkt A und dem Endpunkt E bereitzustellen. Weiterhin können auf diese Weise natürlich auch gezielt Informationen über mögliche Staus erzeugt werden, die dann auf geeignete Weise ausgewertet und weiterverarbeitet werden können.

Gemäß einem dritten Aspekt der Erfindung wird ein System zum Ermitteln der Fortbewegungszeit wenigstens einer mobilen Nutzer-Endeinrichtung zwischen einem Ausgangspunkt A und einem räumlich davon getrennten Endpunkt E und/oder zum Ermitteln der Fortbewegungszeit wenigstens einer mobilen Nutzer-Endeinrichtung zwischen einem Startpunkt und einem räumlich davon getrennten Zielpunkt, wobei die Strecke zwischen dem Startpunkt und dem Zielpunkt in zwei oder mehr Streckensegmente S mit jeweils einem Ausgangspunkt A und einem Endpunkt E unterteilt ist, bereitgestellt, wobei das System erfindungsgemäß durch Mittel zur Durchführung der wie vorstehend beschriebenen erfindungsgemäßen Verfahren gekennzeichnet ist. Bei diesen Mitteln kann es sich beispielsweise um Bestandteile wenigstens eines elektronischen Rechners, um elektronische Bauteile, Komponenten, Schaltungen, Schaltungsteile, um geeignete Programmittel, beziehungsweise Software, und dergleichen handeln.

Gemäß noch einem weiteren Aspekt der Erfindung wird ein Computerprogrammprodukt bereitgestellt, mit einem von einem Computer lesbaren Programmedium, das, wenn das Programm geladen ist, Programmittel zur Durchführung der wie vorstehend beschriebenen erfindungsgemäßen Verfahren aufweist. Ein solches Computerprogrammprodukt kann beispielsweise von einer entsprechenden Speichereinrichtung, aus dem Internet oder dergleichen auf beziehungsweise in den Computer geladen werden.

Die Erfindung wird nun an Hand von Ausführungsbeispielen unter Bezugnahme auf die beiliegenden Zeichnungen näher erläutert. Es zeigen:
- Figur 1: in schematischer Darstellung einen Ausschnitt aus einem zellularen Mobilfunksystem; und
- Figuren 2 und 3: Diagramme, in denen die Anzahl aktiver Mobilfunkteilnehmer über die Fortbewegungszeit aufgetragen ist, wobei in den Figuren 2 und 3 jeweils unterschiedliche Zustände auf den Straßen herrschen.

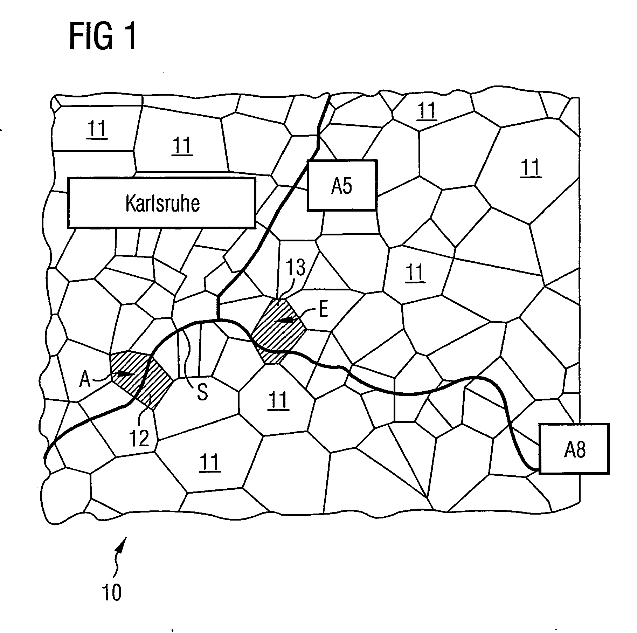

In der Figur 1 ist zunächst ein Ausschnitt aus einem zellularen Mobilfunksystem 10 dargestellt, wobei das Mobilfunksystem 10 aus einer Anzahl von Mobilfunkzellen 11, 12, 13 aufgebaut ist. Jede dieser Zellen 11, 12, 13 deckt eine bestimmte geographische Fläche ab. Die einzelnen Zellen 11, 12, 13 kommunizieren mit entsprechenden Basisstationen (nicht dargestellt), die wiederum mit wenigstens einer Zentraleinheit (ebenfalls nicht dargestellt) kommunizieren.

Über die Basisstationen und die Zentraleinheit lassen sich Informationen über alle jeweils in den einzelnen Zellen 11, 12, 13 aktiven Mobiltelefone ermitteln und auswerten.

Im vorliegenden Ausführungsbeispiel gemäß Figur 1 ist ein Bereich des Mobilfunksystems 10 dargestellt, der sich in der Gegend um Karlsruhe herum befindet. Wie aus Figur 1 ersichtlich ist, ist der dargestellte Bereich des Mobilfunksystems 10 von zwei Autobahnen durchschnitten, nämlich zum einen der Autobahn A5 und zum anderen der Autobahn A8.

Mit Hilfe des Mobilfunksystems 10 soll nun die Reisezeit von Fahrzeugen auf den Autobahnen ermittelt werden. Dazu werden die Autobahnstrecken zunächst in eine Anzahl von Streckensegmenten S aufgeteilt, wobei jedes Streckensegment S von einem Ausgangspunkt A und einem Endpunkt E begrenzt wird. Um eine möglichst lückenlose Ermittlung der Reisezeit zu ermöglichen, bildet der Endpunkt E eines Streckensegments S vorteilhaft gleichzeitig auch den Ausgangspunkt A eines nachfolgenden Streckensegments. Im vorliegenden Ausführungsbeispiel gemäß Figur 1 ist der besseren Übersicht halber nur ein einziges Streckensegment S dargestellt. Es ist jedoch selbstverständlich, daß die nachfolgende Beschreibung auch für Strecken mit mehreren Streckensegmenten analog gilt. In diesem Fall werden die Fortbewegungszeiten für jedes Streckensegment ermittelt und anschließend zur Gesamtfortbewegungszeit aufaddiert.

Bei dem in Figur 1 dargestellten zu untersuchenden Streckensegment S wird der Ausgangspunkt A durch eine bestimmte Zelle 12 des Mobilfunksystems 10 gebildet. Ebenso wird der Endpunkt E des Streckensegments S durch eine weitere Zelle 13 des Mobilfunksystems 10 gebildet, wobei die Zellen 12 und 13 räumlich voneinander getrennt sind. Dabei kann je nach Ausgestaltung des Streckensegments S vorgesehen sein, daß die Zellen 12, 13 direkt benachbart zueinander angeordnet sind. Ebenso ist es denkbar, wie im vorliegenden Beispiel gezeigt, daß sich zwischen den einzelnen Zellen 12, 13 noch weitere Zellen 11 des Mobilfunksystems befinden.

Um nun die Fortbewegungszeit eines Fahrzeugs auf der Autobahn zwischen der Zelle 12 und der Zelle 13 zu bestimmen, werden zunächst fortlaufend spezifische Informationen zu aktiven Mobiltelefonen ermittelt und über die entsprechenden Basisstationen an eine Zentraleinheit übermittelt. Im vorliegenden Beispiel können spezifische Informationen von sämtlichen aktiven Mobiltelefonen ermittelt werden, die sich jeweils in der Zelle 12, beziehungsweise 13, befinden. Auf Grund der spezifischen Informationen ist eine genaue Definition und Individualisierung der einzelnen Mobiltelefone möglich. Um die Fortbewegungszeit ermitteln zu können, wird jede spezifische Information eines aktiven Mobiltelefons in der Zelle 12, beziehungsweise der Zelle 13, mit einer entsprechenden Zeitmarke versehen. Im vorliegenden Ausführungsbeispiel bedeutet dies, daß alle in der als Ausgangspunkt dienenden Zelle 12 befindlichen aktiven Mobiltelefone jeweils mit einer Zeitmarke TA versehen werden. Ebenso werden alle in der als Endpunkt fungierenden Zelle 13 befindlichen aktiven Mobiltelefone mit einer Zeitmarke TE versehen.

In der Zentraleinheit werden nun die einzelnen spezifischen Informationen aller aktiven Mobiltelefone elektronisch miteinander verglichen. Wenn nun spezifische Informationen eines Mobiltelefons, das sich ursprünglich in der Ausgangszelle 12 befunden hat, zu einem späteren Zeitpunkt auch in der Endzelle 13 ermittelt werden, bedeutet dies zunächst, daß sich das Mobiltelefon auf irgendeine Weise von der Zelle 12 in die Zelle 13 bewegt hat. Da alle aktiven Mobiltelefone zu jeder Zeit mit einer entsprechenden Zeitmarke versehen werden, bedeutet dies weiterhin, daß für das genannte Mobiltelefon sowohl eine Zeitmarke TE in der Endzelle 13 als auch eine Zeitmarke TA in der Ausgangszelle 12 vorliegt. Bei Übereinstimmung der spezifischen Informationen wird in der Zentraleinheit nunmehr elektronisch die Zeitdifferenz TE - TA zwischen der Zeitmarke TE und der Zeitmarke TA gebildet. Diese Zeitdifferenz bildet dann die Fortbewegungszeit des Mobiltelefons von der Ausgangszelle 12 hin zur Endzelle 13.

Bei den für die Ermittlung der Fortbewegungszeit zu berücksichtigenden spezifischen Informationen kann es sich um verschiedenstartigste Informationen handeln, die im Zusammenhang mit dem Betrieb der Mobiltelefone, beziehungsweise des Mobilfunksystems 10, ohnehin anfallen und verwertet werden.

Wie sich aus dem in Figur 1 dargestellten Beispiel ergibt, ist es zunächst jedoch nicht unbedingt sicher, ob sich alle Mobiltelefone, die sich von der Ausgangszelle 12 hin zur Endzelle 13 hin bewegen, dies auch über die Autobahn tun. Ebenso ist es nicht unbedingt erforderlich, daß alle in der Ausgangszelle 12 befindlichen aktiven Mobiltelefone sich auch tatsächlich zur Endzelle 13 bewegen. Im dargestellten Beispiel könnten sich einzelne Mobiltelefone beispielsweise auch in Richtung der Autobahn A5 bewegen, so daß solche Mobiltelefone niemals die Endzelle 13 erreichen werden.

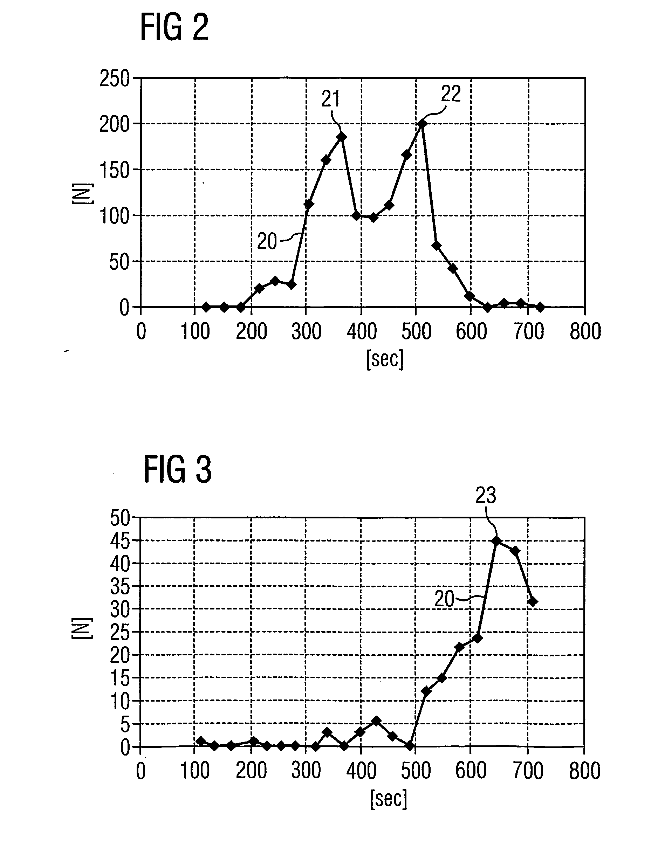

Es muß daher eine Möglichkeit geschaffen werden, wie die einzelnen Mobiltelefone geographisch mit der Autobahn in Verbindung gebracht werden können. Dies kann beispielsweise auf eine wie in den Figuren 2 und 3 dargestellte Weise geschehen. Die Figuren 2 und 3 stellen jeweils Histogramme dar, bei denen generell eine Anzahl von aktiven Mobiltelefonen [N] über der Zeit in Sekunden aufgetragen ist.

In den Figuren 2 und 3 sind jeweils Kurven 20 dargestellt, in denen die Fortbewegungszeiten von aktiven Mobiltelefonen zwischen der Ausgangszelle 12 (dem Ausgangspunkt A) und der Endzelle 13 (dem Endpunkt E) aufgetragen sind. Solche Mobiltelefone, die zwar in der Ausgangszelle 12 erfaßt werden, jedoch niemals die Endzelle 13 erreichen, sind in den Kurven gemäß den Figuren 2 und 3 folglich nicht erfaßt. In den Figuren 2 und 3 sind solche Mobiltelefone erfaßt, die sich tatsächlich von der Ausgangszelle 12 hin zur Endzelle 13 bewegt haben und diese zu einem bestimmten Zeitraum auch erreicht haben.

Die in den Figuren 2 und 3 dargestellten Histogramme sind in Form von Vergleichsdaten in der Zentraleinheit abgelegt und können in dieser bearbeitet beziehungsweise verarbeitet werden.

In den digitalen Histogrammen gemäß den Figuren 2 und 3 sind jeweils die Zeitdifferenzen TE - TA für alle Mobiltelefone verarbeitet, die sich von der Ausgangszelle 12 hin zur Endzelle 13 bewegt haben. Für jedes Mobiltelefon ergibt sich somit eine eigene Fortbewegungszeit von der Ausgangszelle 12 hin zur Endzelle 13. Wie aus den Figuren 2 und 3 ersichtlich ist, existiert eine große Bandbreite an unterschiedlichen Zeitdifferenzen und damit ermittelten Fortbewegungszeiten. In jeder der Kurven ergeben sich jedoch einzelne Maxima bei denjenigen typischen Fortbewegungszeiten, die von den meisten Mobiltelefonen und damit aktiven Teilnehmern im Mobilfunksystem 10 erreicht wird.

Da im Ausführungsbeispiel die Autobahn die schnellste Verbindung zwischen der Ausgangszelle 12 und der Endzelle 13 darstellt, ist davon auszugehen, daß die meisten aktiven, sich fortbewegenden Mobiltelefone Autofahrern zuzuordnen sind, die sich auf der Autobahn bewegen. Ein Maximum an aktiven Mobiltelefonen, die alle die gleiche Fortbewegungszeit zwischen Ausgangszelle 12 und Endzelle 13 benötigen, kann somit mit einem Autobahnstück zwischen Ausgangszelle 12 und Endzelle 13 verknüpft werden. Das bedeutet, daß diejenige Fortbewegungszeit zwischen der Ausgangszelle 12 und der Endzelle 13, die vom Maximum der aktiven Mobiltelefone benötigt wird, die Fortbewegungszeit auf dem als Autobahnstück ausgebildeten Streckensegment S darstellt. Vereinzelte andere Fortbewegungszeiten können durch extrem langsame Fahrzeuge, durch Verkehr auf einem andern Weg oder dergleichen verursacht sein. Diese Fortbewegungszeiten können jedoch vernachlässigt werden, da für die Bestimmung der Fortbewegungszeit auf der Autobahn zwischen dem Ausgangspunkt A und dem Endpunkt E lediglich das Maximum von Bedeutung ist. Wenn sich nun das Maximum verschiebt, bedeutet dies, daß sich die Reisezeit auf dem Streckensegment S zwischen dem Ausgangspunkt A und dem Endpunkt E verlängert, beispielsweise auf Grund einer Verkehrsstörung oder dergleichen.

Bei der in Figur 2 dargestellten Kurve 20 handelt es sich um eine Verknüpfung der aktiven Mobilfunkteilnehmer mit derjenigen Fortbewegungszeit, die diese für den Weg vom Ausgangspunkt A zum Endpunkt E benötigt haben. Wie vorstehend bereits dargelegt wurde, handelt es sich bei den Kurvenmaxima jeweils um solche Mobilfunkteilnehmer, die die Autobahn benutzen. Wie in der Kurve 20 gemäß Figur 2 ersichtlich ist, weist diese insgesamt zwei Maxima 21 und 22 auf. Das bedeutet, daß sich auf dem Autobahn-Streckensegment S zwischen Ausgangszelle 12 und Endzelle 13 aktive Mobiltelefone bewegen, die sich in Fahrzeugen unterschiedlicher Geschwindigkeitskategorien befinden. Zu denken ist hier beispielsweise an den LKW- und PKW-Verkehr.

Die beiden Maxima 21 und 22 von Kurve 20 liegen bei unterschiedlichen Fortbewegungszeiten. Die kürzeren Fortbewegungszeiten sind beispielsweise dem PKW-Verkehr zuzuordnen, während die längeren Fortbewegungszeiten beispielsweise dem LKW-Verkehr zuzuordnen sind. In dem exemplarischen Beispiel gemäß Figur 2 liegt das Maximum 22 bei etwa 510 Sekunden, während das Maximum 21 bei etwa 360 Sekunden liegt. Im vorliegenden Beispiel könnte dies bedeuten, daß LKW eine Fortbewegungszeit von 510 Sekunden und PKW eine Fortbewegungszeit von 360 Sekunden benötigen, um von der Ausgangszelle 12 zur Endzelle 13 zu gelangen.

Zum Vergleich hierzu ist in Figur 3 ein zweites Histogramm desselben Streckensegments S zu einer anderen Zeit dargestellt. Wie in Figur 3 ersichtlich ist, herrscht in der dargestellten beispielhaften Situation nunmehr nur noch ein einziges Maximum 23 vor, das etwa bei 650 Sekunden liegt. Das bedeutet, daß sich zwar wiederum das Maximum aller aktiven Mobiltelefone über das Autobahn-Streckensegment S bewegt, daß aber alle Mobiltelefone auf der Autobahn die gleiche Fortbewegungszeit benötigen. In Weiterführung des Beispiels gemäß Figur 2 kann dies bedeuten, daß sowohl die ansonsten schnelleren Fahrzeuge (PKW) als auch die ansonsten langsameren Fahrzeuge (LKW) eine identische Fortbewegungszeit benötigen. Daraus kann geschlossen werden, daß auf dem Streckensegment S zwischen dem Ausgangspunkt A und dem Endpunkt E ein höheres Verkehrsaufkommen als im Falle von Figur 2 vorherrscht, so daß über die Zentraleinheit für das Streckensegment S eine signifikant erhöhte Reisezeit ermittelt wird.

Die jeweils ermittelten Fortbewegungszeiten pro Streckensegment S werden vorteilhaft fortlaufend ermittelt und aktualisiert. So ist zu jedem beliebigen Zeitpunkt die gerade aktuelle Fortbewegungszeit auf dem Streckensegment S bekannt.

Das erfindungsgemäße Verfahren kann also zunächst dazu eingesetzt werden, allein die zu erwartenden Fortbewegungszeiten auf einzelnen Streckensegmenten S oder auf aus mehreren Streckensegmenten gebildeten Gesamtstrecken zu ermitteln, ohne daß gleichzeitig auch Angaben über aktuell vorherrschende Verkehrssituationen gemacht werden. Da sich die Fortbewegungszeit innerhalb eines jeden Streckensegments S über die Zeit dynamisch verändern kann, kann ein Nutzer des Systems zu jeder Zeit erfahren, wie lange er benötigen wird, um von einem Startpunkt zu einem Zielpunkt zu gelangen.

Weiterhin können die ermittelten Fortbewegungszeiten auch abgespeichert werden, so daß sie zu einem späteren Zeitpunkt als Referenzwerte verwendet werden können. Durch den Vergleich aktuell ermittelter Fortbewegungszeiten mit entsprechenden Referenzwerten lassen sich beispielsweise Verkehrsinformationen erzeugen, etwa darüber, ob auf dem Streckensegment ein Stau herrscht oder nicht. Weiterhin können Referenzwerte auch verwendet werden, um Prognosen für die Zukunft zu erstellen.

Da für die Ermittlung der Fortbewegungszeit auf der Autobahn zwischen dem Ausgangspunkt A und dem Endpunkt E lediglich die Maxima 21, 22 beziehungsweise 23 der Kurven 20 - und damit ein relativer Vergleich - erforderlich ist, kann das Verfahren besonders einfach und kostengünstig zur Bestimmung der Fortbewegungszeit eingesetzt werden, da eine genaue Positionierung der einzelnen Mobiltelefone nicht erforderlich ist. Ebenso spielt die Anzahl der jeweils aktiven Mobiltelefone in dem überwachten Streckensegment S keine Rolle. Bei dem Beispiel gemäß Figur 2 sind beispielsweise wesentlich mehr aktive Mobiltelefone registriert als dies im Beispiel gemäß Figur 3 der Fall ist. Da jedoch immer nur der relative Vergleich zwischen den einzelnen Fortbewegungszeiten berücksichtigt wird, ist dieser Vergleich sowohl bei einer großen als auch bei einer geringeren Anzahl aktiver Mobiltelefone möglich.

Durch das erfindungsgemäße Verfahren wird somit eine Erfassung der Reisezeit auf bestimmten Strecken, im vorliegenden Beispiel auf der Autobahn zwischen dem Ausgangspunkt A und dem Endpunkt E, möglich, die allein auf der Ermittlung von Daten aus dem Mobilfunksystem resultiert, wobei hierbei nur solche Daten genutzt werden, die beim Betrieb des Mobilfunksystems 10 ohnehin anfallen. Eine genaue geographische Positionierung der ermittelten Informationen, auch Map-Matching genannt, ist nicht erforderlich.

### Bezugszeichenliste

- 10: = Mobilfunksystem
- 11: = Zelle
- 12: = Zelle
- 13: = Zelle

- 20: = Kurve, bei der die Anzahl von Mobilfunkteilnehmern über die Fortbewegungszeit aufgetragen ist
- 21: = Maximum
- 22: = Maximum
- 23: = Maximum

- A: = Ausgangspunkt
- E: = Endpunkt
- S: = Streckensegment zwischen A und E

## Patentansprüche

1. Verfahren zum Ermitteln der Fortbewegungszeit mobiler Nutzer-Endeinrichtungen zwischen einem Ausgangspunkt (A) und einem räumlich davon getrennten Endpunkt (E), **gekennzeichnet durch** folgende Schritte:
a) spezifische Informationen von am Ausgangspunkt (A) befindlichen mobilen Nutzer-Endeinrichtungen werden ermittelt und jeweils mit einer Zeitmarke (TA) verknüpft;
b) spezifische Informationen von am Endpunkt (E) befindlichen mobilen Nutzer-Endeinrichtungen werden ermittelt und jeweils mit einer Zeitmarke (TE) verknüpft;
c) die spezifischen Informationen der am Ausgangspunkt (A) und am Endpunkt (E) befindlichen mobilen Nutzer-Endeinrichtungen werden in wenigstens einer Zentraleinheit elektronisch miteinander verglichen;
d) bei Übereinstimmung der spezifischen Informationen einer mobilen Nutzer-Endeinrichtung am Ausgangspunkt (A) und am Endpunkt (E) wird in der Zentraleinheit elektronisch die Zeitdifferenz (TE - TA) zwischen der Zeitmarke (TE) und der Zeitmarke (TA) gebildet und daraus die Fortbewegungszeit ermittelt; und
e) die mit einer Zeitmarke verknüpften spezifischen Informationen jeder mobilen Nutzer-Endeinrichtung und/oder die daraus ermittelten Fortbewegungszeiten werden in Form von Vergleichsdaten zumindest zeitweilig in einer Vergleichsdatei abgelegt.

2. Verfahren nach Anspruch 1, **dadurch gekennzeichnet, daß** dieses unter Verwendung eines Informationsübertragungssystems, insbesondere eines Kommunikationssystems durchgeführt wird, wobei die Fortbewegungszeit aus spezifischen Daten der mobilen Nutzer-Endeinrichtungen des Informationsübertragungssystems ermittelt wird.

3. Verfahren nach Anspruch 1 oder 2, **dadurch gekennzeichnet, daß** dieses unter Verwendung eines Mobilfunksystems (10), insbesondere eines zellularen Mobilfunksystems durchgeführt wird, wobei die mobilen Nutzer-Endeinrichtungen als Mobiltelefone ausgebildet sind und wobei die Fortbewegungszeit aus spezifischen Daten der Mobiltelefone ermittelt wird.

4. Verfahren nach einem der Ansprüche 1 bis 3, **dadurch gekennzeichnet, daß** spezifische Informationen aller am Ausgangspunkt (A) und/oder Endpunkt (E) befindlichen mobilen Nutzer-Endeinrichtungen ermittelt und mit einer entsprechenden Zeitmarke (TA, TE) versehen werden.

5. Verfahren nach einem der Ansprüche 1 bis 4, **dadurch gekennzeichnet, daß** die spezifischen Informationen der am Ausgangspunkt (A) und am Endpunkt (E) befindlichen mobilen Nutzer-Endeinrichtungen an die Zentraleinheit übertragen oder in der Zentraleinheit elektronisch erzeugt werden.

6. Verfahren nach einem der Ansprüche 1 bis 5, **dadurch gekennzeichnet, daß** der Ausgangspunkt (A) und/oder der Endpunkt (E) in Form einer geographischen Größe festgelegt wird.

7. Verfahren nach Anspruch 6, soweit auf einen der Ansprüche 3 bis 5 rückbezogen, **dadurch gekennzeichnet, daß** der Ausgangspunkt (A) als eine Zelle (12) des Mobilfunksystems (10) ausgebildet ist und daß der Endpunkt (E) als eine von dieser Zelle (12) räumlich getrennte weitere Zelle (13) des Mobilfunksystems (10) ausgebildet ist.

8. Verfahren nach Anspruch 6, soweit auf einen der Ansprüche 3 bis 5 rückbezogen, **dadurch gekennzeichnet, daß** der Ausgangspunkt (A) als eine erste Begrenzung einer Zelle (11) des Mobilfunksystems (10) ausgebildet ist und daß der Endpunkt (E) als eine zweite Begrenzung derselben Zelle (11) ausgebildet ist.

9. Verfahren nach einem der Ansprüche 1 bis 8, **dadurch gekennzeichnet, daß** für die mobilen Nutzer-Endeinrichtungen am Ausgangspunkt (A) und/oder für die mobilen Nutzer-Endeinrichtungen am Endpunkt (E) aus für diese spezifischen Informationen ein Aktionsprofil ermittelt wird und daß jedes Aktionsprofil mit einer Zeitmarke (TA, TE) verknüpft wird.

10. Verfahren nach Anspruch 9, **dadurch gekennzeichnet, daß** das Aktionsprofil in der dazugehörigen mobilen Nutzer-Endeinrichtung oder in der Zentraleinheit ermittelt wird.

11. Verfahren nach einem der Ansprüche 1 bis 10, **dadurch gekennzeichnet, daß** die Zentraleinheit wenigstens eine Rechnereinheit mit einem oder mehreren elektronischen Rechner(n) aufweist und daß die Fortbewegungszeit elektronisch in der wenigstens einen Rechnereinheit ermittelt wird.

12. Verfahren nach einem der Ansprüche 1 bis 11, **dadurch gekennzeichnet, daß** die Vergleichsdaten in der Zentraleinheit einem Gewichtungsschritt unterzogen werden.

13. Verfahren nach einem der Ansprüche 1 bis 12, **dadurch gekennzeichnet, daß** in der Zentraleinheit auf der Basis der Vergleichsdaten eine geographische und/oder nutzerspezifische Zuordnung erzeugt wird.

14. Verfahren nach einem der Ansprüche 1 bis 13, **dadurch gekennzeichnet, daß** die mit einer Zeitmarke verknüpften spezifischen Informationen oder Aktionsprofile jeder mobilen Nutzer-Endeinrichtung und/oder die daraus ermittelten Fortbewegungszeiten und/oder die daraus erzeugten Vergleichsdaten innerhalb der Zentraleinheit mit entsprechenden Referenzwerten verglichen werden.

15. Verfahren nach einem der Ansprüche 1 bis 14, **dadurch gekennzeichnet, daß** die Fortbewegungszeit fortlaufend ermittelt wird und daß die Fortbewegungszeit fortlaufend aktualisiert wird.

16. Verfahren zum Ermitteln der Fortbewegungszeit mobiler Nutzer-Endeinrichtungen zwischen einem Startpunkt und einem räumlich davon getrennten Zielpunkt, **dadurch gekennzeichnet, daß** die Strecke zwischen dem Startpunkt und dem Zielpunkt in zwei oder mehr Streckensegmente (S) mit jeweils einem Ausgangspunkt (A) und einem Endpunkt (E) unterteilt wird, daß die Fortbewegungszeit innerhalb eines jeden Streckensegments (S) nach einem der Ansprüche 1 bis 15 ermittelt wird, daß die einzelnen Fortbewegungszeiten der Streckensegmente in der Zentraleinheit aufsummiert werden und daß aus der Summe der einzelnen Fortbewegungszeiten die Gesamtfortbewegungszeit ermittelt wird.

17. Verfahren nach Anspruch 16, **dadurch gekennzeichnet, daß** die einzelnen Fortbewegungszeiten der Streckensegmente (S) fortlaufend ermittelt werden und daß die Gesamtfortbewegungszeit auf der Basis der Fortbewegungszeiten innerhalb der Streckensegmente (S) fortlaufend aktualisiert wird.

18. Verfahren nach einem der Ansprüche 1 bis 17, **dadurch gekennzeichnet, daß** in der Zentraleinheit auf der Basis der ermittelten Fortbewegungszeit(en) und/oder der ermittelten Gesamtfortbewegungszeit(en) Verkehrsinformationen erzeugt werden.

19. Verfahren nach einem der Ansprüche 1 bis 18, **dadurch gekennzeichnet, daß** die mit einer Zeitmarke verknüpften spezifischen Informationen oder Aktionsprofile jeder mobilen Nutzer-Endeinrichtung und/oder die daraus ermittelten Fortbewegungszeiten und/oder die daraus erzeugten Vergleichsdaten und/oder die ermittelten Gesamtfortbewegungszeiten und/oder die erzeugten Verkehrsinformationen von der Zentraleinheit auf ausgewählte oder alle mobile(n) Nutzer-Endeinrichtungen übertragen werden.

20. System zum Ermitteln der Fortbewegungszeit mobiler Nutzer-Endeinrichtungen zwischen einem Ausgangspunkt (A) und einem räumlich davon getrennten Endpunkt (E) und/oder zum Ermitteln der Fortbewegungszeit mobiler Nutzer-Endeinrichtungen zwischen einem Startpunkt und einem räumlich davon getrennten Zielpunkt, wobei die Strecke zwischen dem Startpunkt und dem Zielpunkt in zwei oder mehr Streckensegmente (S) mit jeweils einem Ausgangspunkt (A) und einem Endpunkt (E) unterteilt ist, **gekennzeichnet durch** Mittel zur Durchführung des Verfahrens nach einem der Ansprüche 1 bis 19.

21. Computerprogrammprodukt mit einem auf einem Computer lesbaren Programmedium, das, wenn das Programm geladen ist, Programmittel zur Durchführung des Verfahrens nach einem der Ansprüche 1 bis 19 aufweist.

## Claims

1. Method of determining the travel time of mobile user terminals between a starting point (A) and a finishing point (E) at a distance therefrom, **characterised by** the following steps:
a) specific information from mobile user terminals located at starting point (A) is determined and linked to a time marker (TA);
b) specific information from mobile user terminals located at finishing point (E) is determined and linked to a time marker (TE);
c) the specific information from the mobile user terminals located at starting point (A) and finishing point (E) is electronically compared in at least one central unit;
d) when the specific information from a mobile user terminal at starting point (A) and at finishing point (E) agrees, the time difference (TE - TA) between the time marker (TE) and the time marker (TA) is generated electronically in the central unit and from this the travel time is determined; and
e) the specific information of each mobile user terminal linked to a time marker and/or the travel times determined therefrom are stored at least temporarily in the form of comparison data in a comparison file.

2. Method according to claim 1, **characterised in that** it is carried out using an information transmission system, particularly a communications system, wherein the travel time is determined from specific data from the mobile user terminals of the information transmission system.

3. Method according to claim 1 or 2, **characterised in that** it is carried out using a mobile telephony system (10), particularly a cellular mobile telephony system, wherein the mobile user terminals are in the form of mobile telephones and the travel time is determined from specific data of the mobile telephones.

4. Method according to one of claims 1 to 3, **characterised in that** specific information from all the mobile user terminals located at the starting point (A) and/or finishing point (E) is determined and provided with a corresponding time marker (TA, TE).

5. Method according to one of claims 1 to 4, **characterised in that** the specific information from the mobile user terminals located at the starting point (A) and finishing point (E) is transmitted to the central unit or electronically generated in the central unit.

6. Method according to one of claims 1 to 5, **characterised in that** the starting point (A) and/or the finishing point (E) is fixed in the form of a geographic variable.

7. Method according to claim 6, where dependent on one of claims 3 to 5, **characterised in that** the starting point (A) is in the form of a cell (12) of the mobile telephony system (10) and the finishing point (E) is in the form of another cell (13) of the mobile telephony system (10) at a distance from this cell (12).

8. Method according to claim 6, where dependent on one of claims 3 to 5, **characterised in that** the starting point (A) is in the form of a first boundary of a cell (11) of the mobile telephony system (10) and the finishing point (E) is in the form of a second boundary of the same cell (11).

9. Method according to one of claims 1 to 8, **characterised in that** an action profile is determined for the mobile user terminals at the starting point (A) and/or for the mobile user terminals at the finishing point (E) from information specific thereto, and each action profile is linked to a time marker (TA, TE).

10. Method according to claim 9, **characterised in that** the action profile is determined in the associated mobile user terminal or in the central unit.

11. Method according to one of claims 1 to 10, **characterised in that** the central unit comprises at least one computer unit having one or more electronic computer(s) and **in that** the travel time is determined electronically in the at least one computer unit.

12. Method according to one of claims 1 to 11, **characterised in that** the comparison data are subjected to a weighting step in the central unit.

13. Method according to one of claims 1 to 12, **characterised in that** a geographic and/or user-specific association is generated in the central unit on the basis of the comparison data.

14. Method according to one of claims 1 to 13, **characterised in that** the specific information or action profiles of each mobile user terminal linked to a time marker, and/or the travel times determined therefrom, and/or the comparison data generated therefrom, are compared with corresponding reference values within the central unit.

15. Method according to one of claims 1 to 14, **characterised in that** the travel time is determined continuously and the travel time is updated continuously.

16. Method of determining the travel time of mobile user terminals between a starting point and a destination point at a distance therefrom, **characterised in that** the distance between the starting point and the destination point is subdivided into two or more segments (S) each having a starting point (A) and a finishing point (E), **in that** the travel time within each segment (S) is determined according to one of claims 1 to 15, **in that** the individual travel times of the segments are added together in the central unit and **in that** the total travel time is determined from the sum of the individual travel times.

17. Method according to claim 16, **characterised in that** the individual travel times of the segments (S) are determined continuously and **in that** the total travel time is updated continuously on the basis of the travel times within the segments (S).

18. Method according to one of claims 1 to 17, **characterised in that** traffic information is generated in the central unit on the basis of the travel time(s) determined and/or the total travel time(s) determined.

19. Method according to one of claims 1 to 18, **characterised in that** the specific information linked to a time marker or action profiles of each mobile user terminal and/or the travel times determined therefrom and/or the comparison data generated therefrom and/or the total travel times determined and/or the traffic information generated are transmitted from the central unit to selected ones or all of the mobile user terminals.

20. System for determining the travel time of mobile user terminals between a starting point (A) and a finishing point (E) at a distance therefrom and/or for determining the travel time of mobile user terminals between a starting point and a destination point at a distance therefrom, wherein the distance between the starting point and the destination point is subdivided into two or more segments (S) each having a starting point (A) and a finishing point (E), **characterised by** means for carrying out the method according to one of claims 1 to 19.

21. Computer program product having a computer-readable programming medium which, when the program is loaded, comprises programming means for carrying out the method according to one of claims 1 to 19.

## Revendications

1. Procédé pour déterminer le temps de déplacement d'équipements terminaux mobiles utilisateur entre un point de départ (A) et un point terminal (E) séparé du premier dans l'espace, **caractérisé par** les étapes suivantes :
a) des informations spécifiques d'équipements terminaux mobiles utilisateur se trouvant au point de départ (A) sont déterminées et liées respectivement à une marque temporelle (TA) ;
b) des informations spécifiques d'équipements terminaux mobiles utilisateur se trouvant au point terminal (E) sont déterminées et liées respectivement à une marque temporelle (TE) ;
c) les informations spécifiques des équipements terminaux mobiles utilisateur se trouvant au point de départ (A) et au point terminal (E) sont comparées électroniquement les unes avec les autres dans au moins une unité centrale ;
d) en cas d'accord des informations spécifiques d'un équipement terminal mobile utilisateur au point de départ (A) et au point terminal (E) est constituée électroniquement dans l'unité centrale la différence temporelle (TE-TA) entre la marque temporelle (TE) et la marque temporelle (TA) et le temps de déplacement en est déterminé ; et
e) les informations spécifiques liées à une marque temporelle de chaque équipement terminal mobile utilisateur et/ou les temps de déplacement qui en sont déterminés sont enregistrés sous forme de données de comparaison au moins temporairement dans un fichier de comparaison.

2. Procédé selon la revendication 1, **caractérisé en ce que** cela est effectué par l'emploi d'un système de transmission d'information, en particulier d'un système de communication, sachant que le temps de déplacement est déterminé à partir de données spécifiques des équipements terminaux mobiles utilisateur du système de transmission d'information.

3. Procédé selon la revendication 1 ou 2, **caractérisé en ce que** cela est effectué par l'emploi d'un système de radiocommunication mobile (10), en particulier d'un système de radiocommunication mobile cellulaire, sachant que les équipements terminaux mobiles utilisateur sont conçus comme des téléphones mobiles et que le temps de déplacement est déterminé à partir de données spécifiques des téléphones mobiles.

4. Procédé selon l'une quelconque des revendications 1 à 3, **caractérisé en ce que** sont déterminées des informations spécifiques de tous les équipements terminaux mobiles utilisateur se trouvant au point de départ (A) et/ou au point terminal (E) et qu'elles sont munies d'une marque temporelle correspondante (TA, TE).

5. Procédé selon l'une quelconque des revendications 1 à 4, **caractérisé en ce que** les informations spécifiques des équipements terminaux mobiles utilisateur se trouvant au point de départ (A) et au point terminal (E) sont transmises à l'unité centrale ou sont produites électroniquement dans l'unité centrale.

6. Procédé selon l'une quelconque des revendications 1 à 5, **caractérisé en ce que** le point de départ (A) et/ou le point terminal (E) est fixé sous forme d'une grandeur géographique.

7. Procédé selon la revendication 6, en référence à l'une quelconque des revendications 3 à 5, **caractérisé en ce que** le point de départ (A) est conçu comme une cellule (12) du système de radiocommunication mobile (10) et que le point terminal (E) est conçu comme une autre cellule (13) du système de radiocommunication mobile (10), séparée dans l'espace de cette cellule (12).

8. Procédé selon la revendication 6, en référence à l'une quelconque des revendications 3 à 5, **caractérisé en ce que** le point de départ (A) est conçu comme une première limitation de cellule (11) du système de radiocommunication mobile (10) et que le point terminal (E) est conçu comme une seconde limitation de la même cellule (11).

9. Procédé selon l'une quelconque des revendications 1 à 8, **caractérisé en ce que** pour les équipements terminaux mobiles utilisateur au point de départ (A) et/ou pour les équipements terminaux mobiles utilisateur au point terminal (E) est déterminé pour ces informations spécifique un profil d'action et que chaque profil d'action est lié à une marque temporelle (TA, TE).

10. Procédé selon la revendication 9, **caractérisé en ce que** le profil d'action est déterminé dans l'équipement terminal mobile utilisateur y appartenant ou dans l'unité centrale.

11. Procédé selon l'une quelconque des revendications 1 à 10, **caractérisé en ce que** l'unité centrale présente au moins une unité d'ordinateur avec un ou plusieurs ordinateurs électroniques et que le temps de déplacement est déterminé électroniquement dans au moins une unité d'ordinateur.

12. Procédé selon l'une quelconque des revendications 1 à 11, **caractérisé en ce que** les données de comparaison sont soumises dans l'unité centrale à une étape de pondération.

13. Procédé selon l'une quelconque des revendications 1 à 12, **caractérisé en ce que** dans l'unité centrale est produite, sur la base des données de comparaison, une affectation géographique et/ou spécifique à l'utilisateur.

14. Procédé selon l'une quelconque des revendications 1 à 13, **caractérisé en ce que** les informations spécifiques liées à une marque temporelle ou les profils d'action de chaque équipement terminal mobile utilisateur et/ou les temps de déplacement déterminés à partir de ceux-ci et/ou les données de comparaison sont comparées à l'intérieur de l'unité centrale à des valeurs de référence correspondantes.

15. Procédé selon l'une quelconque des revendications 1 à 14, **caractérisé en ce que** le temps de déplacement est déterminé en permanence et que le temps de déplacement est actualisé en permanence.

16. Procédé pour déterminer le temps de déplacement d'équipements terminaux mobiles utilisateur entre un point de départ et un point d'arrivée séparé du premier dans l'espace, **caractérisé en ce que** le trajet entre le point de départ et le point d'arrivée est divisé en deux ou plusieurs segments de trajet (S) avec respectivement un point de départ (A) et un point terminal (E), que le temps de déplacement à l'intérieur de chaque segment de trajet (S) est déterminé selon l'une quelconque des revendications 1 à 15, que les différents temps de déplacement des segments de trajet sont additionnés dans l'unité centrale et qu'à partir de la somme des différents temps de déplacement est déterminé le temps de déplacement total.

17. Procédé selon la revendication 16, **caractérisé en ce que** les différents temps de déplacement des segments de trajet (S) sont déterminés en permanence et que le temps de déplacement total est actualisé en permanence sur la base des temps de déplacement à l'intérieur des segments de trajet (S).

18. Procédé selon l'une quelconque des revendications 1 à 17, **caractérisé en ce que** dans l'unité centrale sont produites des informations de circulation sur la base du ou des temps de déplacement déterminé(s) et/ou du ou des temps de déplacement total déterminé(s).

19. Procédé selon l'une quelconque des revendications 1 à 18, **caractérisé en ce que** les informations spécifiques liées à une marque temporelle ou les profils d'action de chaque équipement terminal mobile utilisateur et/ou les temps de déplacement déterminés et/ou les données de comparaison produites et/ou les temps de déplacement total déterminés et/ou les information de circulation produites sont transmis de l'unité centrale à tous ou à certains équipements terminaux mobiles utilisateur sélectionnés.

20. Système pour déterminer le temps de déplacement d'équipements terminaux mobiles utilisateur entre un point de départ (A) et un point terminal (E) séparé du premier dans l'espace et/ou pour déterminer le temps de déplacement d'équipements terminaux mobiles utilisateur entre un point de départ et un point d'arrivée séparé du premier dans l'espace, sachant que le trajet entre le point de départ et le point d'arrivée est divisé en deux ou plusieurs segments de trajet (S) avec respectivement un point de départ (A) et un point d'arrivée (E), **caractérisé par** des moyens pour la réalisation du procédé selon l'une quelconque des revendications 1 à 19.

21. Produit de programme informatique avec un média de programme lisible sur un ordinateur, qui, lorsque le programme est chargé, présente des moyens de programme pour la réalisation du procédé selon l'une quelconque des revendications 1 à 19.
